# EUROPÄISCHE PATENTSCHRIFT

(11) **EP 2 629 928 B1**
(45) Veröffentlichungstag und Bekanntmachung des Hinweises auf die Patenterteilung: **25.04.2018**
(21) Anmeldenummer: 11748903.9
(22) Anmeldetag: 22.08.2011
(51) Int. Cl.: B23Q 1/01, B23Q 1/38, B23Q 1/40, F16C 29/00

(54) **FÜHRUNGSANORDNUNG UND WERKZEUGMASCHINE MIT EINER SOLCHEN FÜHRUNGSANORDNUNG**
GUIDE ARRANGEMENT AND MACHINE TOOL COMPRISING SUCH A GUIDE ARRANGEMENT
ENSEMBLE DE GUIDAGE ET MACHINE-OUTIL ÉQUIPÉE D'UN TEL ENSEMBLE DE GUIDAGE

(30) Priorität: 22.10.2010 DE 102010049319
(43) Veröffentlichungstag der Anmeldung: 28.08.2013
(60) Teilanmeldung: 16000799.3
(73) Patentinhaber: Gleason-Pfauter Maschinenfabrik GmbH, 71636 Ludwigsburg (DE)
(72) Erfinder: ADLER, Kai, 71636 Ludwigsburg (DE); GRESSLER, Sabrina, 74321 Bietigheim-Bissingen (DE); ERNST, Martin, 64289 Darmstad (DE); KOHLER, Dietmar, 75428 Illingen (DE)
(74) Vertreter: Leinweber & Zimmermann
(86) Internationale Anmeldenummer: PCT/EP2011/004215
(87) Internationale Veröffentlichungsnummer: WO 2012/052082

(56) Entgegenhaltungen:
- EP-A1- 0 927 599
- EP-A2- 1 630 434
- JP-A- 9 131 634

## Beschreibung

Die Erfindung betrifft eine Führungsanordnung, insbesondere einer Werkzeugmaschine, zum Führen einer linearen Bewegung eines sich gegenüber einem stationären Teil entlang der Bewegungsachse und einer orthogonal zu dieser verlaufenden Querrichtung erstreckenden beweglichen Teils, mit einem dem stationären Teil zugeordneten Abstützbereich, an dem sich das bewegliche Teil gegen eine in einer Abstandsrichtung orthogonal zur Erstreckung des beweglichen Teils wirkende Haltekraft gleitend abstützt, und einer Wälzführung mit einem dem stationären Teil zugeordneten Wälzbereich, wobei eine von dem beweglichen Teil ausgehende, eine der Haltekraft entgegengerichtete Komponente aufweisende und an dem Wälzbereich angreifende Last innerhalb des stationären Teils eine Belastung entlang eines zu dem Abstützbereich führenden Belastungsweges bewirkt, sowie eine mit einer solchen Führungsanordnung ausgestattete Werkzeugmaschine.

Derartige Führungsanordnungen sind bekannt, beispielsweise aus der DE 34 35 593 A1 oder der DE 34 29 692. So erstreckt sich ein Tisch gemäß den Ausführungen der DE 34 29 692 G3 in einer horizontalen Ebene über einem Maschinenbett und wird unter anderem von der Gewichtskraft des Tisches auf dem Maschinenbett gehalten. Eine Bewegung des Tisches entgegengesetzt der Gewichtskraft wird eingeschränkt, indem der Tisch an seinen seitlichen Enden in Querrichtung vom Maschinenbett in Form von Führungsschienen vorragende Vorsprünge umgreift. Auf diese Weise wird der Tisch in vertikaler Richtung zuverlässig unter Einsatz von Wälzführungen geführt. Gemäß der Lehre der DE 34 35 593 A1 ist beiderseits eines Schlittenteils in Querrichtung eine Wälzführung vorgesehen, die in einer Hinterschneidung eines Basisteils abrollt und dazu in einer entsprechenden Umgreifung des Schlittenteils zusammen mit einem für eine spielfreie Einstellung der Wälzführung sorgenden Stellelement untergebracht ist.

Bei einer ähnlichen Anordnung, die in der DE 195 00 786 A1 offenbart ist, ist ein eine Bewegung in vertikaler Richtung entgegen der Schnittkraft beschränkender Umgiiff eines Querschlittens um einen in Querrichtung vorragenden Gegenführungsflansch eines Längsschlittens vorgesehen, der allerdings nicht als Wälzführung, sondern als Gleitführung hintergreift.

Diese bekannten Führungsanordnungen haben sich allerdings insbesondere hinsichtlich ihrer Steifigkeit bei hohen Belastungen nicht als vollkommen zufriedenstellend erwiesen. Der Erfindung liegt daher die Aufgabe zugrunde, eine Führungsanordnung der eingangs genannten Art, insbesondere unter dem Gesichtspunkt der Steifigkeit, zu verbessern. JP H 09 131634 A offenbart eine Führungsanordnung nach dem Oberbegriff des Anspruchs 1, mit Gleit- und Wälzführungen, die ein Abheben des beweglichen Teils nicht verhindern. Das Verhältnis der auf die jeweiligen Führungen wirkenden Last soll veränderbar einstellbar sein.

EP 0 927 599 A1 offenbart ein Führungssystem für die Säule einer Werkzeugmaschine, bei der zusätzlich zu einer Wälzführung eine Abstützung auf einem separat zum Maschinenbett vorgesehenen Fundament erfolgt.

EP 1 630 434 A2 offenbart ein lineares Gleitführungssystem, das durch Hintergreifen einer Schiene bereits selbständig das Abheben eines beweglichen Teils vom stationären Teil verhindert. Diese Aufgabe wird von der Erfindung durch Bereitstellung einer Führungsanordnung mit den Merkmalen von Anspruch 1 gelöst.

Im Rahmen der Erfindung ist erkannt worden, dass eine Sicherung des beweglichen Teils gegen Lasten entgegen der Abstandsrichtung (Sicherung gegen ein Abheben des bewegten Teils) über den aus dem Stand der Technik bekannten Hintergriff der Abstützfläche zu einer Beeinträchtigung der seitlichen Steifigkeit der dieser Abstützfläche zugeordneten Gleitführung führt. Dies ist bedingt durch das Vorragen des den Abstützbereich bildenden Teils des stationären Teils gegenüber seiner Umgebungskonstruktion, wodurch ein geschwächter Materialbereich geschaffen wird. Die in den Wälzbereich eingeleitete Last belastet das zwischen dem Wälzbereich und dem Abstützbereich liegende Material des stationären Teils über stationäre innere Spannungen oder auch, bei Bearbeitungslasten, dynamische Kraftflüsse. Entlang dieses Belastungsweges im Stand der Technik verläuft bezüglich der Abstandsrichtung auch die Lastkomponente, so dass der Abstützbereich auf Druck belastet wird.

Gemäß der Erfindung wirkt dagegen die innerhalb des stationären Teils herrschende Belastung auf dem Weg vom Wälzbereich zum Abstützbereich bezüglich der Abstandsrichtung wenigstens in dem Wegabschnitt der Wegrichtung entgegen, so dass wenigstens in diesem Abschnitt eine Zugbelastung auftritt. Auf diese Weise kann die Last geeignet in den Wälzbereich eingeleitet werden, ohne dass es dazu einer Hintergreifung des Abstützbereiches bedarf.

Mit anderen Worten wird ein Bereich, in dem eine von einer externen Last, beispielsweise verursacht durch ein Kippmoment eines an dem beweglichen Teil gelagerten Fräskopfes oder eine Bearbeitungskraft beim Arbeiten der Werkzeugmaschine, hervorgerufene Belastung auftritt, von dem beweglichen Teil in das stationäre Teil verlegt. Zudem bietet die erfinderische Lösung ein Feld für neue konstruktive Gestaltungen einer kombinierten Gleit- und Wälzführung, welche weitere Vorteile hinsichtlich der Vermeidung von die Linearführung beeinträchtigenden Klemmkräften und/oder einer einfacheren Herstellung der Führungsanordnung betreffen.

Zunächst werden jedoch einige der oben angegebenen Merkmale noch weiter erläutert. So ist mit den Bezeichnungen "stationäres" und bewegliches" Teil lediglich eine Bezeichnung verwendet, die auf die Relativbewegung zwischen beiden Teilen abzielt und keinesfalls eine Einschränkung dahingehend bedeutet, dass das stationäre Teil im absoluten Sinn stationär gelagert sein muss. Vielmehr kann das stationäre Teil selbst gegenüber einem weiteren Teil beweglich gelagert sein.

Das bewegliche Teil ist gegenüber dem stationären Teil so angeordnet, dass es sich mit seiner dem stationären Teil zugewandten Seite entlang des stationären Teils erstreckt. Die Erstreckung verläuft zum einen in Richtung der Bewegungsachse, zum anderen in einer orthogonal zur Bewegungsachse verlaufenden Querrichtung, welche unabhängig von der Orientierung der Flächen des Wälzbereiches und/oder des Abstützbereiches die Gesamtorientierung der Lagerung des beweglichen Teils gegenüber dem stationären Teil wiedergibt. Bevorzugt ist die so definierte Erstreckung eine planare Erstreckungsebene. Der Wälzbereich steht mit einem Gegenstück des beweglichen Teils in einem über Wälzkörper vermittelten Wälzeingriff.

Die durch die gleitende Abstützung des beweglichen Teils an dem Abstützbereich des stationären Teils bewirkte Gleitführung ist bevorzugt in jedem Belastungszustand der Führungsanordnung aktiv. Dies wird durch eine Haltekraft sichergestellt, die in Abstandsrichtung, das heißt orthogonal zur Erstreckung des bewegten Teils (und somit auch des stationären Teils) wirkt und gegen die die Abstützung erfolgt. Die Abstandsrichtung ist somit für das Beispiel eines sich in einer horizontalen Ebene abstützenden beweglichen Teils die Schwererichtung, das heißt, sofern es in der nachfolgenden Beschreibung auf den Richtungsvektor der Abstandsachse ankommt, ist dieser von dem beweglichen Teil zum stationären Teil hin gerichtet. Die Haltekraft entspricht somit der Komponente in Abstandsrichtung der auf den sich an dem Abstützbereich abstützenden Bereichs des beweglichen Teils wirkenden Kräfte, welche zur Aufrechterhaltung der Gleitführung positiv sein soll. Anderenfalls verliert die Führungsanordnung die beabsichtigte, zum Erreichen einer hohen Gesamtsteifigkeit der Führungsanordnung beitragende Steifigkeit der Gleitführung, die den Großteil der Gesamtsteifigkeit der Führungsanordnung ausmacht.

Je nach dem, an welcher Stelle des beweglichen Teils der zum Abstützbereich komplementäre abgestützte Bereich der Gleitführung angeordnet ist, und wie die Bewegungsachse und die Querrichtung bezüglich der Schwererichtung angeordnet sind, ergeben sich unterschiedliche Haltekräfte, zu denen die Gewichtskraft oder von ihr hervorgerufene Momente positiv beitragen können, die Haltekraft aber auch vermindern können.

Entsprechend können solche von der Schwerkraft hervorgerufenen Einflüsse neben Bearbeitungslasten während der Arbeit beispielsweise einer die Führungsanordnung aufweisende Werkzeugmaschine auch Lasten darstellen, die von der Wälzführung, das heißt seitens deren stationären Teils von dem Wälzbereich statisch oder dynamisch aufgenommen werden. Die von der Wälzführung bereitgestellte Gegenkraft sorgt zum einen dafür, dass das bewegliche Teil die Linearbewegung weiter ausführen kann und nicht entgegen der Abstandsrichtung daraus abgelenkt wird. Zum anderen kann sie eine weitere Steifigkeit für die Führungsanordnung bereitstellen, und bei entsprechender Auslegung sicherstellen, dass der Gleitkontakt der Gleitführung beibehalten wird.

Erfindungsgemäß ist die am Wälzbereich angreifende Last von einer orthogonal zur Abstandsrichtung durch den Abstützbereich verlaufende Fläche weggerichtet. Mit anderen Worten kann die Belastungskraft entgegen der Abstandsrichtung oberhalb des Abstützbereiches in das stationäre Teil eingeleitet werden, und das bewegliche Teil muss sich herstellungstechnisch in Abstandsrichtung weniger weit nach unten erstrecken. Dieser Aspekt der Erfindung wird auch unabhängig von dem Verlauf des Belastungsweges offenbart und als vorteilhaft angesehen.

Für den Fall, dass sich der Abstützbereich auch orthogonal zur Erstreckung des beweglichen Teils über eine ausgedehnten Bereich erstreckt, wird es bevorzugt, das die angreifende Last von der am weitesten vom beweglichen Teil entfernten solchen durch den Abstützbereich verlaufenden Fläche weggerichtet ist, insbesondere aber auch von der dem beweglichen Teil am nächsten liegenden derartigen Fläche.

Besonders bevorzugt ist die Wälzführung auch zur Aufnahme von zur Querrichtung parallelen Kräften ausgelegt. Auf diese Weise können insbesondere bei Einsatz in einer Werkzeugmaschine entstehende Querkräfte insbesondere über eine Vorspannung der Wälzführung abgefangen werden und führen zu keiner Belastung beispielsweise eines zur Bewegung des beweglichen Teils eingesetzten Spindelantriebs. In diesem Zusammenhang weist der Wälzbereich zweckmäßig eine Wälzfläche auf, die gegenüber der Abstandsrichtung in einem Winkel von 30° bis 60°, bevorzugt 40° bis 50° geneigt ist. Es können allerdings auch gekrümmte Wälzflächen verwendet werden, deren an die Krümmung angelegte Tangente bevorzugt wenigstens über einen Bereich der Fläche in diesem Winkelbereich gegenüber der Abstandsrichtung geneigt sind.

Besonders bevorzugt sind der Abstützbereich und der Wälzbereich einer Seite des stationären Teils zugeordnet, wobei sich die "Seite" auf seitlich bezüglich der Querrichtung bezieht, und die Bereiche sind in Querrichtung hintereinander angeordnet. Mit anderen Worten sind die beiden der gleichen Seite zugeordneten Bereiche in einer Draufsicht auf eine orthogonal zur Bewegungsachse stehenden Ebene nebeneinander angeordnet. Dieser Aspekt der Erfindung wird im Rahmen der Erfindung auch unabhängig von einem Verlauf innerer Belastungswege, in dem die angreifende Last innerhalb des stationären Teils Belastungen bewirkt, als vorteilhaft angesehen und wird an dieser Stelle explizit als von diesem Merkmal unabhängig realisierbar offenbart. Auf diese Weise wird zur Aufnahme von insbesondere in Querrichtung wirkenden Lasten ein günstiger Hebelarm realisiert, so dass die auftretenden Lasten zu einer geringeren Beanspruchung der Führungsanordnung führen. In diesem Zusammenhang ist zweckmäßig der Wälzbereich in Querrichtung weiter außen als der Abstützbereich, insbesondere als jeder dieser Seite zugeordnete Gleit-Abstützbereich, angeordnet. Dies führt zu nochmals verbesserten Hebelverhältnissen bei der Lastaufnahme. In diesem Zusammenhang ist auch zweckmäßig vorgesehen, dass zwischen dem Abstützbereich und dem Wälzbereich in Querrichtung ein Abstand gebildet ist, der insbesondere wenigstens halb so groß ist wie die Querabmessung des Wälzbereichs selbst.

In einer bevorzugten Ausgestaltung ist in Querrichtung gesehen beidseits einer Wälzschiene ein Wälzbereich ausgebildet, der mit einem passenden Gegenstück im Wälzeingriff steht, wobei ein Bereich eine Querbelastung in einer Querrichtung abstützen kann, der andere Bereich eine Querbelastung in entgegengesetzter Richtung.

In einer besonders bevorzugten Ausführungsform weist der Abstützbereich eine zur Querrichtung parallele Abstützfläche auf und besteht insbesondere daraus. Dies erlaubt herstellungstechnische Vorteile bei der gemeinsamen Parallelausrichtung von Gleit- und Wälzführung, welche zur Vermeidung von Klemmkräften mit äußerster Präzision vorzunehmen ist.

Zur Sicherstellung einer ausreichend hohen Eigensteifigkeit der Gleitführung wird es bevorzugt, dass eine Querabmessung des Abstützbereiches wenigstens dreimal, bevorzugt wenigstens viermal, insbesondere wenigstens fünfmal so groß ist wie die des Wälzbereichs.

Im zweckmäßigen Einsatz der Führungsanordnung soll das Skalarprodukt aus Abstandsrichtung und Schwererichtung größer oder gleich Null sein. Auf diese Weise wird sichergestellt, dass die Gewichtskraft des beweglichen Teils oder daran befestigter Teile zwar über von ihr hervorgerufene Momente, nicht aber als unmittelbare Kraft eine der Haltekraft entgegengesetze Last darstellen kann.

Besonders bevorzugte Ausführungsformen betreffen zum einen die Ausrichtung der Abstandsrichtung orthogonal zur Schwererichtung, das heißt einen Einsatz mit vertikaler Bewegungsachse, sowie einen Einsatz mit einer parallel zur Schwererichtung verlaufenden Abstandsrichtung, das heißt mit horizontaler Bewegungsachse. Dies erlaubt geeignete Einsatzmöglichkeiten für Horizontal und Vertikalschlittenanordnungen.

Wie oben bereits erläutert, kann insbesondere bei einem Einsatz mit vertikaler Bewegungsachse eine erforderliche Haltekraft nicht mehr in allen Bereichen der Gleitführung durch Gewichtskräfte oder von den Gewichtskräften hervorgerufene Momente bewirkt werden. Daher wird es bevorzugt, dass die Führungsanordnung unter einer über die Wälzführung vermittelten Vorspannung gehalten wird, welche zur Haltekraft beiträgt. Dieser Beitrag muss gegebenenfalls lokal ausreichend groß sein, um ein beispielsweise von einer inklusive Fräskopf 3,5 Tonnen wiegenden Schlittenanordnung hervorgerufenes Moment zu halten. Dazu können die einzelnen Abschnitte der Wälzführung über eine geeignete Anpassung von Wälzbereich (Wälzschiene) und Wälzschuhe (Führungsschuhe) mit den Wälzkörpern, zum Beispiel Kugeln, unabhängig voneinander vorgespannt werden.

Für eine Grundvariabilität oder zur Feineinstellung der einzelnen Wälzführungsabschnitte und benachbarten Gleitführungsabschnitte wird es bevorzugt, dass die Vorspannung auf beliebige Weite einstellbar ist. Dazu ist insbesondere vorgesehen, Montageplatten, welche die Wälzführung mit dem stationären und/oder dem beweglichen Teil verbinden und bevorzugt die Wälzschuhe mit dem beweglichen Teil verbinden, einzusetzen, wobei die Montageplatten mit einer geeigneten Materialstärke eingesetzt werden. Dann ist über eine zum Beispiel durch Abschleifen der Platten erfolgende Feineinstellung die Vorspannung modifizierbar. Der modifizierende Eingriff über die Montageplatten wirkt sich auch auf die in der Wälzführung herrschende Spannung aus. Diesbezüglich wird bevorzugt, dass man sich bei der Modifizierung der Spannung in der Wälzführung innerhalb eines für deren zuverlässiges Funktionieren zulässigen Bereiches bewegt. Die Montageplatten können ausbaubar und ersetzbar eingebaut sein. Die Einstellbarkeit der Vorspannung ist somit lokal unterschiedlich wählbar. Eine weitere Möglichkeit, die Vorspannung/Haltekraft zu modifizieren ist durch eine Hydraulikdruckbeaufschlagung im Bereich der Gleitführung gegeben, allerdings nur für eine die Haltekraft verringernde Modifikation zur Minderung der Gleitreibungskräfte.

In einer zweckmäßigen Ausführungsform bildet ein Träger den Abstützbereich (der noch einen auf das Material des Trägers aufzubringenden Gleitbelag umfassen kann), das heißt die Abstützfläche ist im Wesentlichen eine dem beweglichen Teil zugeordnete Seitenfläche des Trägers. Auf diesen (gleichen) Träger ist bevorzugt eine Wälzschiene aufgebracht, die den Wälzbereich bildet, wobei ein dazu passender Wälzschuh (Führungsschuh) der Wälzführung insbesondere über die oben erwähnte Montageplatte am beweglichen Teil montiert ist. Weiter ist zweckmäßig die Festlegung der Wälzschiene auf gleicher Höhe des Trägers wie die Abstützfläche, was in der Herstellung und Einstellung das Erreichen der erforderlichen Parallelität von Wälz- und Gleitführung erleichtert. Auf diese Weise können störende Klemmkräfte weitgehend vermieden werden, und es tritt bei der Herstellung nur eine exakt zu bearbeitende Fläche für Wälz- und Gleitführung auf.

In diesem Zusammenhang kann eine verbleibende Abweichung von einer perfekten parallelen Ausrichtung der beiden Führungen über die sich mit der Wälzschiene in Eingriff befindlichen Wälzschuhe mittels deren Abstützung an einem Gegenlager kompensiert werden. Dazu ist vorgesehen, das Gegenlager mit einer vorgegebenen Nachgiebigkeit entgegen der Abstützrichtung zu versehen. Bevorzugt wird dies dadurch realisiert, dass eine Materialstärke des Gegenlagers in Abstandsrichtung passend eingestellt wird und insbesondere bezogen auf die Materialstärke des das Gegenlager in der Erstreckungsebene umgebenden Bereiches des beweglichen Teils herabzusetzen. Das Gegenlager erscheint dann als ein seitlicher Flansch zum Hauptkörper des beweglichen Teils, insbesondere durchläuft das Profil der dem stationären Teil abgewandten Fläche des beweglichen Teils in Querrichtung beim Übergang zum/vom Gegenlager der Wälzschuhe eine Stufe.

Besonders bevorzugt weist die Führungsanordnung an in Querrichtung beiden Seiten eine Wälz- und Gleitführung auf. Diese kann insbesondere achsensymmetrisch zu einer parallel zur Bewegungsachse verlaufenden Mittenachse ausgelegt sein. Auf diese Weise kann auch bei vergleichsweise großen beweglichen Teilen eine zuverlässige Führungsanordnung mit ausreichender Eigensteifigkeit sichergestellt werden. Die beiden Paare von Wälz- und Gleitführung erstrecken sich somit parallel beidseits des Antriebs des beweglichen Teils.

In einer zweckmäßigen Ausführungsform ist ein mit dem Wälzbereich in Wälzeingriff stehender Bereich des beweglichen Teils und ein auf dem Abstützbereich gleitend abgestützter Bereich des beweglichen Teils auf entlang der Bewegungsachse angeordnete und voneinander beabstandete Abschnitte aufgeteilt. Auf diese Weise kann eine ausreichende Führung sichergestellt werden, die einen verringerten Reibungsverlust aufweist, da in Richtung der Bewegungsachse gesehen in einigen Abschnitten weder eine Wälz- noch eine Gleitführung stattfindet. Bevorzugt sind wenigstens zwei Abschnitte auf jeder Seite realisiert, wobei die der Wälzführung zugeordneten Bereiche in jedem Abschnitt durch einen oder mehrere Wälzschuhe realisiert werden können. Die Erstreckung des sich abstützenden Bereichs und des im Wälzeingriff stehenden Bereichs in Bewegungsachsenrichtung kann größenordnungsmäßig gleich gewählt werden, kann sich aber auch je nach zu erwartenden Halte- und Lastkräften unterscheiden.

Neben der Führungsanordnung per se stellt die Erfindung noch eine Werkzeugmaschine mit einer solchen Führungsanordnung mit einem oder mehreren der oben beschriebenen Merkmale unter Schutz. Dazu ist insbesondere daran gedacht, einen ersten Schlitten in Form beispielsweise eines Hauptständers auf einem feststehenden Maschinenbett mit einer ersten Führungsanordnung zu führen, und an dem ersten Schlitten einen zweiten, insbesondere einen Vertikalschlitten, mit einer zweiten erfindungsgemäßen Führungsanordnung zu führen. Zudem kann auch ein fest mit dem Maschinenbett verbundener Gegenständer einen mit einer dritten solchen Führungsanordnung geführten Vertikalschlitten aufweisen.

Weitere Einzelheiten, Merkmale und Vorteile der Erfindung ergeben sich aus der nachfolgenden Beschreibung mit Bezug auf die beiliegenden Figuren, von denen
Fig. 1 eine Perspektivansicht einer Werkzeugmaschine zeigt,
Fig. 2 eine Querschnittsansicht durch einen unteren Teil der Werkzeugmaschine zeigt,
Fig. 3 eine vergrößerte Ansicht eines Bereiches aus Fig. 2 ist und
Fig. 4 eine Perspektivansicht des Vertikalschlittens aus Fig. 1 ist.

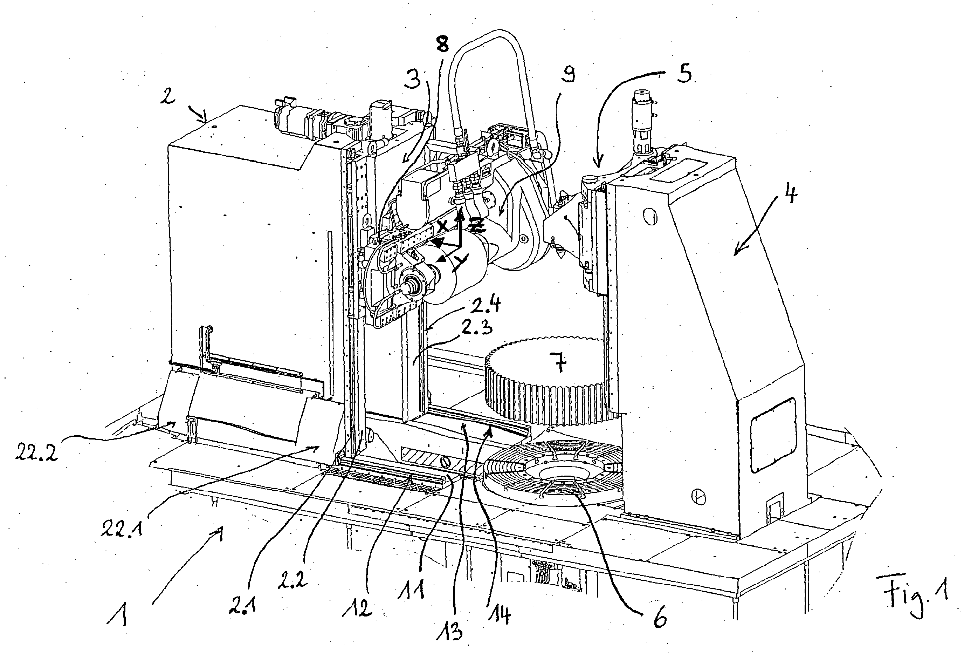

In Fig. 1 ist eine Werkzeugmaschine 10 dargestellt, in der die erfindungsgemäße Führungsanordnung mehrfach eingesetzt ist. Die Werkzeugmaschine 10 ist zum Bearbeiten von Verzahnungen ausgelegt und kann zum Beispiel Verzahnungen durch Wälzfräsen oder Profilfräsen herstellen und auch Hartfeinbearbeitungen der Verzahnungen vornehmen.

Ein auf den Boden abgestütztes Maschinenbett 1 der Werkzeugmaschine 10, das nur abgeschnitten dargestellt ist, trägt an seiner dem Boden abgewandten Seite zwei parallel in radialer (x)-Richtung angeordnete Gleitschienen 11, 13, auf denen ein sich gleitend abstützender Hauptständer 2 gegenüber dem Maschinenbett 1 in radialer Richtung verfahrbar ist. Dazu dient in bekannter Weise ein im Raum zwischen den Gleitschienen 11, 13 angeordnetes Antriebssystem, das beispielsweise aus einem Servomotor, einem Radial-Axial-Lager und einer Kugelgewindespindel bestehen kann. Die Gleitschienen 11, 13 sind Teil einer jeweiligen Gleitführung für den Hauptständer 2, welche aufgrund ihrer hohen Eigensteifigkeit eine hohe Gesamtsteifigkeit der Linearführung des Hauptständers 2 bewirkt. Zudem erzeugt die in der Gleitführung entstehende Reibkraft, welche durch die Normalkraft zu den Gleitschienen 11, 13 aufgrund des Eigengewichts des Hauptständers 2 hervorgerufen wird, eine Bedämpfung des Antriebs. Auch bei stark wechseinden, auf den Hauptständer 2 einwirkenden Bearbeitungskräften kann dem Entstehen unkontrollierter Schwingungen im System entgegengewirkt werden.

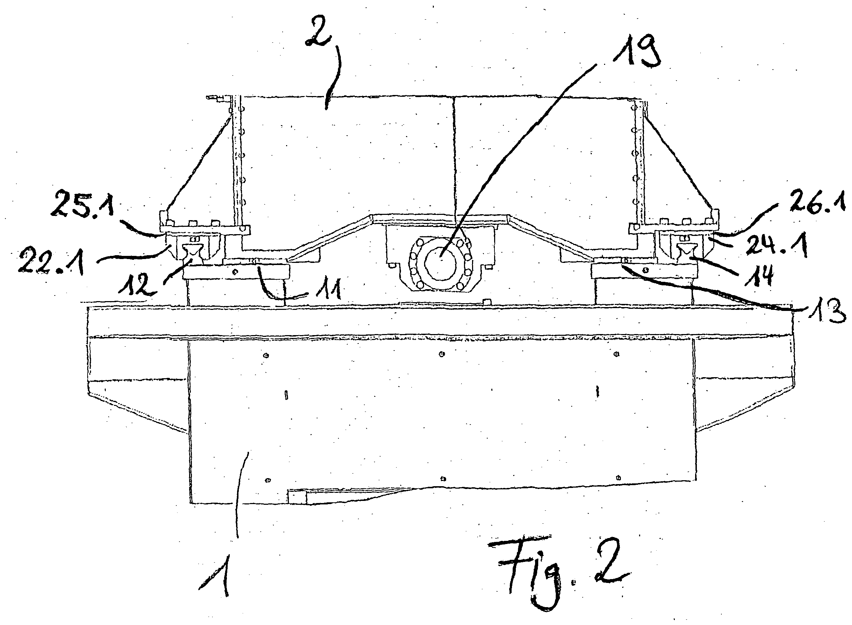

Bei der Führungsanordnung ist zwischen dem Maschinenbett 1 und dem Hauptständer 2 in einer orthogonal zur Bewegungsachse (x) verlaufenden Querrichtung (y) hinter der Gleitschiene 11 eine parallel zu dieser verlaufende Wälzschiene 12 vorgesehen, die auf Höhe der Gleitschiene 11 auf der Verlängerung des die Gleitschiene 11 bildenden Bauteils 1.1 in Querrichtung festgelegt ist. Auf der in Querrichtung (y) anderen Seite des Hauptständers 2 ist eine Wälzschiene 14 entsprechend symmetrisch zu der in Fig. 1 dem Betrachter zugewandten Seite angeordnete parallel zur Gleitschiene 13 angeordnet (Fig. 2). Die Wälzschienen 12, 14 sind Bestandteile von linearen Wälzführungen, welche ein Abheben des Hauptständers 2 von den Gleitschienen 11, 13 im Falle von statischen oder dynamischen Kippmomenten zuverlässig verhindert, wie später mit Bezug auf Fig. 2 ausführlicher erläutert wird, und des weiteren eine Abstützung in Querrichtung (y) leisten.

Die hauptständerseitigen Komplementäre zu den Wälzschienen 12, 14 sind Wälzschuhe 22.1, 22.2 und 24.1, 24.2, die an den Seiten des Hauptständers 2 bezüglich der (x)-Achse, jeweils eine vorne und eine hinten, befestigt sind und mit den Wälzschienen 12, 14 in Wälzeingriff stehen. In Fig. 1 ist nur der in Bewegungsrichtung (x) hintere Wälzschuh 22.2 mit einem Bezugszeichen versehen, der Wälzschuh 22.1 befindet sich am vorderen Ende (Fig. 2) während die zur Wälzschiene 14 gehörenden Wälzschuhe in Fig. 1 nicht erkennbar sind.

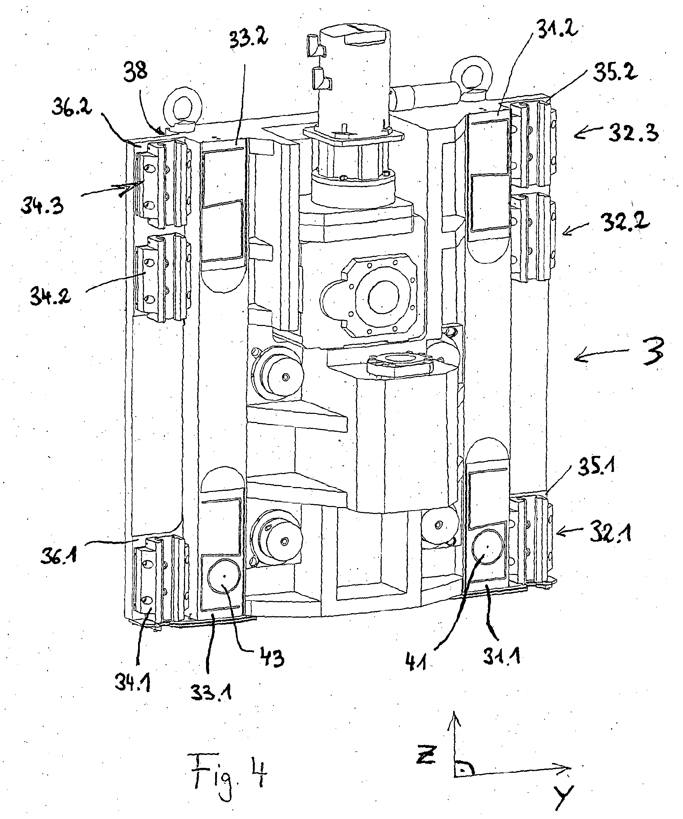

Bevor auf die weiteren Einzelheiten der kombinierten Gleit- und Wälzführungen eingegangen wird, werden noch die weiteren Bestandteile der Werkzeugmaschine 10 erläutert. An dem Hauptständer 2 ist ein relativ zu ihm in vertikaler Richtung verfahrbarer Vertikalschlitten 3 angeordnet. Für die Führung des Vertikalschlittens 3 auf dem Hauptständer 2 ist ebenfalls eine kombinierte Wälz- und Gleitführung vorgesehen, wozu in der in Fig. 1 in Querrichtung (y) gesehen rechten Seite eine Gleitfläche (Schiene) 2.3 und eine Wälzschiene 2.4 parallel zueinander angeordnet sind, und entsprechende Schienen 2.1, 2.2 auch an der in Querrichtung linken Seite vorgesehen sind. Im Übrigen entspricht die Anordnung aus Gleitführung und Wälzführung im Wesentlichen der Führung des Hauptständers 2 auf dem Maschinenbett 1, wobei auf konstruktive Änderungen später bei der Beschreibung von Fig. 4 eingegangen wird.

Wiederum am Vertikalschlitten 3 drehbar gelagert ist eine den Fräskopf 9 und die Werkzeugspindel, auf welcher die Bearbeitungswerkzeuge aufspannbar sind, tragende Anordnung. In der in Fig. 1 dargestellten Lage ist die Werkzeugspindelachse in (y)-Richtung ausgerichtet. Das in Fig. 1 eingezeichnete Koordinatensystem wird zwar bei einer Drehung des Fräskopfes mit verdreht, zum Zwecke der Beschreibung der vorliegenden Erfindung wird jedoch das eingezeichnete Koordinatensystem als raumfestes Bezugssystem herangezogen.

Ein zu bearbeitendes Werkstück, hier ein stirnverzahntes Rad 7 wird in bekannter Weise auf einem Werkstücktisch 6 aufgespannt, welcher in Richtung der Achse (x) zwischen dem Hauptständer 2 und einem Gegenständer 4 angeordnet ist. Der Gegenständer 4 ist selbst gegenüber dem Maschinenbett 1 unbeweglich festgelegt und trägt einen weiteren Vertikalschlitten 5, welcher ähnlich wie der Vertikalschlitten 3 über zwei parallel angeordnete kombinierte Wälz- und Gleitführungen am Gegenständer 4 geführt wird.

In Fig. 2 ist eine durch den Wälzschuh 22.1 und (auf der anderen Seite) 24.1 gelegte Schnittansicht orthogonal zur Bewegungsachse (x) des Hauptständers 2. Man erkennt die jeweils parallele, beabstandete Anordnung des als Gleitschiene dienenden Bereichs 11 und der Wälzschiene 12, die vom Wälzschuh 22.1 beidseits umgriffen wird, um Belastungs- und Kippkräften, welche anderweitig ein Abheben des Hauptständers 2 von der Gleitfläche 11 bewirken würden, entgegenzuwirken.

Je nach Lage des Schwerpunkts des Hauptständers 2 nebst aller von ihm getragenen Teile wirkt eine in diesem Fall positive Haltekraft im Bereich des Abstützbereichs 11, an dem sich der abgestützte Bereich 21.1 gleitend abstützt. Wird bei der Bearbeitung des Werkstücks 7 eine in (z)-Richtung wirkende Bearbeitungskraft erzeugt, wird diese vom Bearbeitungswerkzeug aufgenommen und letztendlich in den Hauptständer 2 eingeleitet.

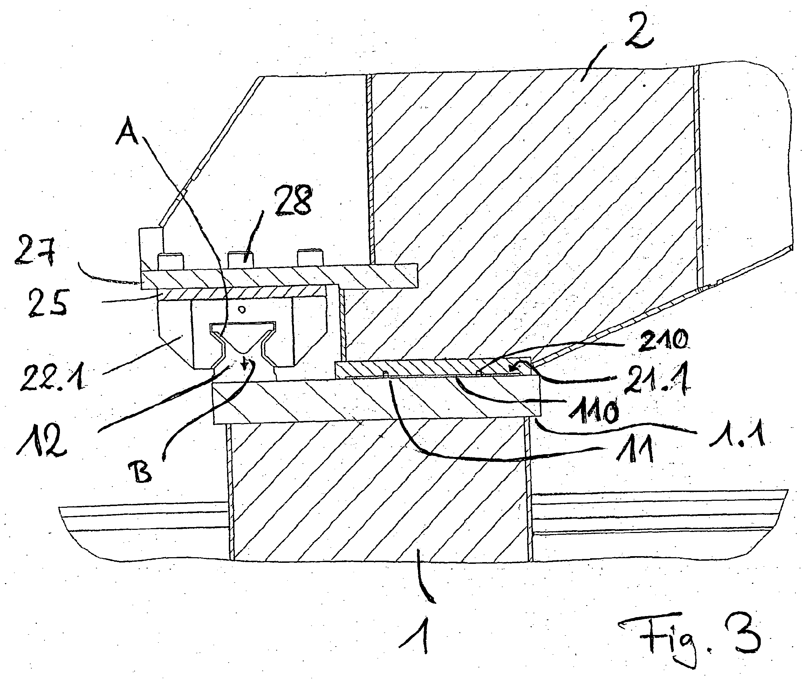

Im Hauptständer 2 entsteht eine Belastung auf Zug, die an der in Fig. 3 mit A bezeichneten Fläche angreift und dort als eine Last mit positiver (z)-Komponente eingeleitet wird. Diese Last ist also von der Abstützfläche 11 weggerichtet, da sie oberhalb von ihr eingeleitet wird. Diese dann in Richtung auf das Maschinenbett 1 und der darauf festgelegten Abstützfläche 11 propagierende Last wirkt im in Fig. 3 mit B bezeichneten Bereich auf Zug, ist also bezüglich der Abstandsrichtung (-z) und der Lastpropagationsrichtung entgegengesetzt. Somit kann die Last zuverlässig aufgenommen werden. Gleichzeitig ist die Abstützfläche entlang ihrer vollen Breite in Querrichtung (y) vollumfänglich und massiv vom Maschinenbett 1 unterstützt und eine ausreichende (Seiten-) Steifigkeit der Gleitführung ist sichergestellt.

Die Wälzführung 22.1, 12 steht unter einer wälzführungsinternen Eigenvorspannung, die eine Steifigkeit der Wälzführung bewirkt. Zudem kann über die Anbringung der Wälzführung in den jeweiligen Abschnitten (22.1, 22.2, 24.1, 24.2) eine der Eigenvorspannung überlagerte externe Vorspannung erzeugt werden, welche je nach Lage des Abschnitts und dort erwarteter Belastung zu der Kraft beitragen kann, mit dem zum Beispiel hier die der Gleitfläche 11 gegenüberliegende abgestützte Fläche 21.1 (Siehe Fig. 3) des Hauptständers auf die Gleitfläche 11 gedrängt wird. Dadurch wird in einem Feder-Ersatzbild die Federnulllage geändert. Des weiteren erhöht sich auch die in der Gleitführung bei Bewegung erzeugte Reibungskraft. Die Gleitführung in diesem Abschnitt besteht somit aus den sich gegenüberliegenden, in (xy)-Ebene erstreckenden Flächen 11 und 21.1, sowie einem zwischen diesen Flächen eingebrachten, ein Abformen der Gleitflächen bewirkenden Gleitbelag 110, beispielsweise einem SKC-Belag 110. Die auf die Gleitführung orthogonal zu ihrer Erstreckung wirkenden Kräfte setzen sich somit zum einen aus den durch das Gewicht und die Gewichtsverteilung (Schwerpunkt) des Hauptständers und der weiteren an ihn gekoppelten Schlitten und Werkzeugen ohne die beim Bearbeiten des Werkstücks 7 auftretenden Kräfte, die beim Bearbeiten des Werkstücks 7 auftretenden Kräfte, und der auf Grund der externen Vorspannung wirkenden Kräfte zusammen. Mit zwischen der Wälzschuhhalterung 27 und dem Wälzschuh 22.1, der an der Halterung 27 über Schrauben 28 verschraubt ist, zwischengesetzten Abstimmplatten 25 lässt sich eine gewünschte externe Vorspannung einstellen und darüber die Vorspannung eines einzelnen Abschnitts der Wälzführung, hier in Fig. 3 des Abschnitts (12, 22.1) modifizieren. Dazu wird die Abstimmplatte 25 vor ihrem Einsetzen unter Berücksichtigung der an der Gleitführung (11, 110, 21.1) gewünschten Haltekraft auf eine gewünschte Materialdicke geschliffen.

Die Gleitfläche 11 ist die dem Hauptständer 2 zugewandte Fläche eines einstückigen Plattenteils 1.1, das sich in (x)- und (y)-Richtung erstreckt, und die Schiene 12 ist auf Höhe der Gleitfläche 11 auf dem Plattenteil 1.1 festgelegt. Dadurch können die Gleitfläche 11 und die Montageführung der Wälzführung bei der Herstellung und Einstellung der Führungsanordnung nur als eine exakt zu bearbeitende Fläche bearbeitet werden, so dass eine möglichst genaue Parallelität der von den Flächen erzeugten Bewegungsachsen sichergestellt wird. Somit besteht nur eine geringe Gefahr des Verklemmens beim Wälzeingriff. Verbleibenden Abweichungen dieser Parallelität wird dadurch begegnet, dass die Gegenlager 27 der Wälzschuhe 22 gegenüber einer von der Gleitfläche 11 weggerichteten Kraft (d. i. entgegen der Abstandsrichtung) eine gewünschte Nachgiebigkeit aufweisen. Dies wird erreicht, indem das Gegenlager 27 in Form eines am Schlitten. (Hauptständer oder Vertikalschlitten) angesetzten Flansches mit geringerer Materialstärke ausgebildet sind.

Seitens der der Gleitfläche 11 gegenüberliegenden Abstützfläche 21.1, welche sich in Richtung der Bewegungsachse (x) etwa so weit wie der Führungsschuh 22.1 erstreckt, sind in dem Gleitbelag noch Schmiernuten 210 zur Zuführung eines Schmiermittels gebildet. Die Abstützflächen können sich aber auch etwas über die Erstreckung des jeweils benachbarten Wälzschuhs hinaus erstrecken, oder auch eine geringere Ausdehnung in Richtung der Bewegungsachse haben, die jeweils in jedem Abschnitt individuell wählbar ist, wodurch sich lokal unterschiedliche Steifigkeiten einstellen lassen. Zwischen der gleitend abgestützten Fläche 21.1 und der dem Wälzschuh 22.2 zugeordneten entsprechenden gleitend abgestützten Fläche 21.2, die in den Figuren nicht erkennbar ist, ist der Hauptständer zum Beispiel durch Abschabungen von der Gleitfläche 11 beabstandet. In diesem Bereich findet keine Gleitführung statt.

In Fig. 4 ist in einer vergrößerten Darstellung die dem Hauptständer 2 zugewandte Seite des Vertikalschlittens 3 abgebildet. Der Vertikalschlitten 3 erstreckt sich somit gegenüber dem Hauptständer 2 entlang seiner Bewegungsachse (z) und der Querachse (y), so dass die (y)-(z)-Ebene seine Erstreckungsebene ist, unabhängig davon, dass einzelne Bereiche des Vertikalschlittens 3 aus beispielsweise der durch die gleitend abgestützten Bereiche 31.1, 31.2, 33.1, 33.2 gelegte (y)-(z)-Ebene hinausragen.

Auf der Seite des Vertikalschlittens 3 (des beweglichen Teils) ist die Gleitführung (2.1/31, 2.3/33) auf beiden Seiten des Spindelantriebs parallel und auf in Abstandsrichtung gleicher Höhe angeordnet und der diesbezügliche Teil der Gleitführung wird durch die gleitend abgestützten Bereiche 31.1, 31.2, 33.1 und 33.2 gebildet. In Querrichtung (y) außerhalb dieser gleitend abgestützten Bereiche sind Wälzschuhe parallel zur Bewegungsachse (z) angeordnet, die den Bewegungsteil-seitigen Anteil der Wälzführung bilden. Die Wälzschuhe 34.1, 34.2 und 34.3 stehen in Wälzeingriff mit der in Fig. 1 gezeigten Wälzschiene 2.4, während die gleitend abgestützten Bereiche 33.1 und 33.2 in Gleiteingriff mit der in Fig. 1 gezeigten Abstützfläche oder -schiene 2.3 stehen.

In Bewegungsachsenrichtung (z) gesehen zwischen den Wälzschuhen 34.1 und 34.2 sowie den abgestützten Bereichen 33.1 und 33.2 findet kein Wälz- bzw. Gleiteingriff statt, um Reibungsverluste bei ausreichender Stabilität und Steifigkeit der Führung gering zu halten. Das Gleiche gilt auf der in Querrichtung (y) anderen Seite des Vertikalschlittens 3.

In Anbetracht der in Fig. 1 dargestellten Lage des an dem Vertikalschlitten 3 drehbar angeordneten Axialschlittens nebst Fräskopf, Werkzeugspindel und Werkzeug ergibt sich eine Lage des Schwerpunktes der an dem Vertikalschlitten 3 hängenden Gesamtanordnung derart, dass ohne Bearbeitungskräfte ein Haltemoment entsteht, welches auf die in Fig. 4 im unteren Bereich gezeigten Bereiche der Wälz- und Gleitführung eine Druckkraft erzeugt und somit zur Haltekraft beiträgt, während es bezüglich der in Fig. 4 oberen Bereiche der Wälz- und Gleitführung als eine Zuglast wirkt, so dass in diesem Bereich die zur Beibehaltung der Gleitführungen 2.3, 33.2 und 2.1, 31.1 erforderliche Haltekraft über eine Vorspannung geleistet werden muss. Diese wird von den Wälzführungen 2.4, 34.2, 34.3 und entsprechend auf der anderen Seite 2.2, 32.2, 32.3 durch deren über die externe Vorspannung modifizierte Eigenvorspannung aufgebracht.

Die ohne Bearbeitungskräfte auftretende Belastung auf die Werkzeugmaschine 10 ist an diesem oberen Bereich (2.4, 34.2, 34.3) demnach am größten. Aus diesem Grund ist die im oberen Abschnitt von der Wälzführung eingestellte Vorspannung größer als im unteren Abschnitt, und wird in diesem Ausführungsbeispiel über zwei hintereinander angeordnete Wälzschuhe 34.2 und 34.3 aufgebracht, auf der anderen Seite entsprechend über die Wälzschuhe 32.2 und 32.3. Es ist erfindungsgemäß bevorzugt vorgesehen, die Länge des Wälzeingriffsbereichs im größeren Lasten ausgesetzten Abschnitt um 30 Prozent oder mehr, bevorzugt 60 Prozent oder mehr, insbesondere 100 Prozent oder mehr größer einzurichten als die Länge der Wälzführung in Bewegungsachsenrichtung im weniger belasteten Abschnitt, beispielsweise realisiert durch eine größere Anzahl von Wälzschuhen (Rollwagen). Alternativ und/oder zusätzlich kann der wirksame Hebelarm, also der Abstand von dem Gesamtschwerpunkt aus beweglichem Teil und von ihm getragener Anordnung zu der Anbringstelle des Wälzschuhs, vergrößert werden. Die Wahl einer höheren Eigenvorspannung führt aufgrund einer daraus bedingten höheren Eigensteifigkeit zu einer höheren Belastung der Wälzpaarung und einem entsprechend höheren Verschleiß. Daher ist die Möglichkeit, die Eigenvorspannung der Wälzführung im stärker belasteten Abschnitt um 30 Prozent oder mehr, bevorzugt 60 Prozent größer zu wählen als die Eigenvorspannung im weniger belasteten Abschnitt, zum Beispiel um bis zu 30-60 Prozent, eine weniger bevorzugte Variante.

Die oben bereits erläuterten Abstimmplatten sind in Fig. 4 mit dem Bezugszeichen 35.1, 35.2 sowie auf der anderen Seite mit 36.1 und 36.2 bezeichnet. Die im oberen Abschnitt vorgesehenen Abstimmplatten 35.2 und 36.2 könnten aber ebenfalls noch unterteilt sein, so dass jedem der im oberen Abschnitt angeordneten Wälzschuhe für eine individuelle Einstellbarkeit in jedem Abschnitt eine eigene Platte zugeordnet werden kann. Eine weitere Möglichkeit, die Vorspannungen und darüber die Haltekräfte in den einzelnen Abschnitten lokal unabhängig voneinander zu modifizieren, besteht über ein Aufbringen eines Hydraulikdrucks, worin in den mit 41, 43 bezeichneten Bereichen eine Hydraulikfluidleitung mündet. Dies wird bei den Vertikalschlitten 3 bevorzugt in den unteren abgestützten Flächen realisiert, bei dem Hauptständer 2 in den werkstücknahen abgestützten Abschnitten.Des Weiteren ist aus Fig. 4 erkennbar, dass auf der den Wälzschuhen 32, 34 abgewandten Seite ihres Gegenlagers Material vom Hauptkörper des Vertikalschlittens 3 abgenommen ist, wodurch die Stufen 38 und 39 entstehen. Diese Materialabnahme erfolgt in Abstimmung auf eine gewünschte Nachgiebigkeit des Wälzschuh-Gegenlagers entgegen der Abstandsrichtung (x), um bei verbleibenden Abweichungen von einer perfekt parallel angeordneten Wälz- und Gleitführung über die Wälzführung ausgeglichenen Ausgleichskräften einen geringeren Widerstand entgegenzusetzen, so dass eine die Führung beeinträchtigende Klemmkraft zuverlässig vermieden werden kann.

## Patentansprüche

1. Führungsanordnung, insbesondere einer Werkzeugmaschine (10), zum Führen einer linearen Bewegung eines sich gegenüber einem stationären Teil (1, 2) entlang der Bewegungsachse (x, z) und einer orthogonal zu dieser verlaufenden Querrichtung (y) erstreckenden beweglichen Teils, mit
einem dem stationären Teil zugeordneten Abstützbereich (11, 13, 21, 23), an dem sich das bewegliche Teil gegen eine in einer Abstandsrichtung (-z, x) orthogonal zur Erstreckung des beweglichen Teils wirkende Haltekraft gleitend abstützt, und
einer Wälzführung (12/22, 14/24, 2.2/32, 2.4/34) mit einem dem stationären Teil zugeordneten Wälzbereich (12, (A), 14,2.2, 2.4), wobei eine von dem beweglichen Teil ausgehende, eine der Haltekraft entgegengerichtete Komponente aufweisende und an dem Wälzbereich angreifende Last innerhalb des stationären Teils eine Belastung entlang eines zu dem Abstützbereich führenden Belastungsweges bewirkt, wobei der Belastungsweg einen Wegabschnitt (B) mit einer der Lastkomponente in Abstandsrichtung entgegengerichteten Komponente aufweist,
**dadurch gekennzeichnet, dass** der Wälzbereich in Abstandsrichtung näher an dem beweglichen Teil liegt als der Abstützbereich und die am Wälzbereich angreifende Last von einer orthogonal zur Abstandsrichtung durch den Abstützbereich verlaufenden Fläche weggerichtet ist.

2. Führungsanordnung nach Anspruch 1, bei der die Wälzführung auch zur Aufnahme von zur Querrichtung parallelen Kräften ausgelegt ist.

3. Führungsanordnung nach einem der vorhergehenden Ansprüche, bei der bezüglich der Querrichtung der Abstützbereich und der Wälzbereich einer Seite des stationären Teils zugeordnet sind und die Bereiche in Querrichtung hintereinander angeordnet sind.

4. Führungsanordnung nach Anspruch 3, bei der der Wälzbereich in Querrichtung weiter außen als der Abstützbereich, insbesondere als jeder dieser Seite zugeordnete Gleit-Abstützbereich angeordnet ist.

5. Führungsanordnung nach Anspruch 4, bei der der Wälzbereich (A) eine Wälzfläche aufweist, die gegenüber der Abstandsrichtung unter einem Winkel von 30° bis 60°, bevorzugt 40° bis 50°, geneigt ist.

6. Führungsanordnung nach einem der vorhergehenden Ansprüche, bei der der Abstützbereich eine zur Querrichtung parallele Abstützfläche (11) aufweist und insbesondere daraus besteht.

7. Führungsanordnung nach einem der vorhergehenden Ansprüche, bei der eine Querabmessung des Abstützbereiches wenigstens dreimal, bevorzugt wenigstens viermal, insbesondere wenigstens fünfmal so groß ist wie die des Wälzbereichs.

8. Führungsanordnung nach einem der vorhergehenden Ansprüche, bei der das Skalarprodukt aus Abstandsrichtung und Schwererichtung größer oder gleich Null ist, insbesondere bei der die Abstandsrichtung orthogonal zur Schwererichtung ist oder parallel zur Schwererichtung ist.

9. Führungsanordnung nach einem der vorhergehenden Ansprüche, die weiter unter einer insbesondere über die Wälzführung vermittelten und insbesondere zur Haltekraft beitragenden Vorspannung gehalten ist.

10. Führungsanordnung nach Anspruch 9, bei der die Vorspannung einstellbar ist.

11. Führungsanordnung nach Anspruch 10, bei der die Einstellung der Vorspannung lokal unterschiedlich erfolgen kann.

12. Führungsanordnung nach einem der Ansprüche 11 oder 12, bei der die Einstellbarkeit über die Materialstärke einer/mehrerer die Wälzführung mit dem stationären und/oder dem beweglichen Teil verbindenden Montageplatte(n) (25, 35) geleistet wird.

13. Führungsanordnung nach einem der vorhergehenden Ansprüche, bei der der Wälzbereich von einer auf einem insbesondere den Abstützbereich bildenden Träger (1.1), insbesondere auf gleicher Höhe mit dem Abstützbereich, festgelegten Wälzschiene (12) gebildet ist, und ein dazu passender Wälzschuh (22.1, 22.2) der Wälzführung insbesondere über die Montageplatte an dem beweglichen Teil montiert ist.

14. Führungsanordnung nach Anspruch 13, bei der ein Gegenlager (27) des Wälzschuhs eine vorgegebene Nachgiebigkeit entgegen der Abstützrichtung hat.

15. Führungsanordnung nach einem der vorhergehenden Ansprüche, bei der bezüglich der Querrichtung zu beiden Seiten ein Abstützbereich und eine Wälzführung vorgesehen sind.

16. Führungsanordnung nach einem der vorhergehenden Ansprüche, bei der ein mit dem Wälzbereich im Wälzeingriff stehender Bereich des beweglichen Teils und ein auf dem Abstützbereich gleitend abgestützter Bereich des beweglichen Teils auf entlang der Bewegungsachse angeordnete und voneinander beabstandete Abschnitte aufgeteilt ist.

17. Werkzeugmaschine (10) mit einer Führungsanordnung nach einem der vorhergehenden Ansprüche, insbesondere mit einer ersten solchen Führungsanordnung zum horizontalen Führen eines ersten Schlittens/Ständers (2) auf einem Maschinenbett (1) der Werkzeugmaschine, und weiter insbesondere einer zweiten solche Führungsanordnung zum Führen eines zweiten Schlittens (3) an dem ersten Schlitten/Ständer entlang einer orthogonal zur ersten Bewegungsachse, insbesondere vertikal verlaufenden zweiten Bewegungsachse.

## Claims

1. A guide arrangement, in particular of a machine tool (10), for guiding a linear movement of a moveable part with respect to a stationary part (1, 2) extending along the axis of movement (x, z) and a transverse direction (y) running orthogonally to the latter, having
a support region (11, 13, 21, 23) assigned to the stationary part, on which support region the moveable part is slidingly supported against a holding force that acts in a distance direction (-z, x) orthogonal to the extension of the moveable part, and
a rolling guide (12/22, 14/24, 2.2/32, 2.4/34) with a rolling region (12, (A), 14,2.2, 2.4) assigned to the stationary part, a load originating from the moveable part, having a component oriented in the direction opposite to the holding force and acting on the rolling region, causing within the stationary part loading along a loading path leading to the support region, the loading path comprising a path section (B) with a component oriented in the direction opposite to the load component in the distance direction,
**characterised in that** the rolling region is closer to the moveable part in the distance direction than the support region, and the load acting on the rolling region is directed away from a surface running through the support region and orthogonal to the distance direction.

2. The guide arrangement according to Claim 1, wherein the rolling guide is also designed to absorb forces parallel to the transverse direction.

3. The guide arrangement according to any of the preceding claims, wherein relative to the transverse direction the support region and the rolling region are assigned to one side of the stationary part and the regions are arranged one behind the other in the transverse direction.

4. The guide arrangement according to Claim 3, wherein the rolling region is arranged further to the outside in the transverse direction than the support region, in particular than each slide support region assigned to this side.

5. The guide arrangement according to Claim 4, wherein the rolling region (A) has a rolling surface which is inclined relative to the distance direction by an angle of 30° to 60°, preferably 40° to 50°.

6. The guide arrangement according to any of the preceding claims, wherein the support region has a support surface (11) parallel to the transverse direction and in particular consists of the latter.

7. The guide arrangement according to any of the preceding claims, wherein a transverse dimension of the support region is at least three times, preferably at least four times, in particular at least five times as great as that of the rolling region.

8. The guide arrangement according to any of the preceding claims, wherein the scalar product of the distance direction and the direction of gravity is greater than or equal to zero, in particular wherein the distance direction is orthogonal to the direction of gravity or is parallel to the direction of gravity.

9. The guide arrangement according to any of the preceding claims, which is additionally held under a pre-tensioning force which is applied in particular by means of the rolling guide and in particular contributing to the holding force.

10. The guide arrangement according to Claim 9, wherein the pre-tensioning force is adjustable.

11. The guide arrangement according to Claim 10, wherein the pre-tensioning force can be adjusted differently at different locations.

12. The guide arrangement according to either of Claims 11 or 12, wherein the adjustability is achieved by means of the material thickness of one or more mounting plate(s) (25, 35) connecting the rolling guide to the stationary and/or to the moveable part.

13. The guide arrangement according to any of the preceding claims, wherein the rolling region is formed by a rolling rail (12) fixed to a carrier (1.1) which in particular forms the support region, in particular at the same height as the support region, and a rolling shoe (22.1, 22.2) of the rolling guide adapted to the latter is mounted on the moveable part, in particular by means of the mounting plate.

14. The guide arrangement according to Claim 13, wherein a counter-bearing (27) of the rolling shoe has a predetermined amount of flexibility in the direction opposite to the support direction.

15. The guide arrangement according to any of the preceding claims, wherein a support region and a rolling guide are provided on either side relative to the transverse direction.

16. The guide arrangement according to any of the preceding claims, wherein a region of the moveable part that is in rolling engagement with the rolling region and a region of the moveable part that is slidingly supported on the support region are subdivided into sections that are arranged along the axis of movement and are spaced apart from one another.

17. A machine tool (10) having a guide arrangement according to any of the preceding claims, in particular having a first such guide arrangement for horizontally guiding a first carriage/stand (2) on a machine bed (1) of the machine tool, and also in particular a second such guide arrangement for guiding a second carriage (3) on the first carriage/stand along a second axis of movement running orthogonally to the first axis of movement, in particular vertically.

## Revendications

1. Agencement de guidage, notamment pour une machine-outil (10), permettant le guidage du déplacement linéaire d'une partie mobile s'étendant, par rapport à une partie stationnaire (1, 2), le long de l'axe de déplacement (x, z) et le long d'un sens transversal (y) orthogonal à ce dernier, comprenant :
une zone d'appui (11, 13, 21, 23) associée à la partie stationnaire et sur laquelle la partie mobile est en appui coulissant contre une force de retenue agissant dans le sens de l'écartement (-z, x) orthogonal à l'étendue de la partie mobile, et
un guidage à roulement (12/22, 14/24, 2.2/32, 2.4/34) présentant une zone de roulement associée à la partie stationnaire (12, (A), 14, 2.2, 2.4) ; une charge partant de la partie mobile et présentant une composante dirigée en sens inverse de la force de retenue et affectant la zone de roulement causant, à l'intérieur de la partie stationnaire, une sollicitation le long d'un trajet de sollicitation menant à la zone d'appui, ledit trajet de sollicitation présentant une section de trajet (B) comportant une composante dirigée en sens inverse de la composante de charge dans le sens de l'écartement,
**caractérisé en ce que** la zone de roulement, dans le sens de l'écartement, est plus proche de la partie mobile que ne l'est la zone d'appui et la charge affectant la zone de roulement est dirigée à l'opposée d'une surface passant par la zone d'appui de manière orthogonale au sens de l'écartement.

2. Agencement de guidage selon la revendication 1, dans lequel le guidage à roulement est également conçu pour recevoir des forces parallèles au sens transversal.

3. Agencement de guidage selon l'une des revendications précédentes, dans lequel, par rapport au sens transversal, la zone d'appui et la zone de roulement sont associées à un côté de la partie stationnaire, et les zones, dans le sens transversal, sont disposées l'une derrière l'autre.

4. Agencement de guidage selon la revendication 3, dans lequel la zone de roulement, dans le sens transversal, est située plus à l'extérieur que la zone d'appui, notamment plus à l'extérieur que chaque zone d'appui coulissant associée à ce côté.

5. Agencement de guidage selon la revendication 4, dans lequel la zone de roulement (A) présente une surface de roulement qui, par rapport au sens de l'écartement, est inclinée en formant un angle de 30° à 60°, de préférence de 40° à 50°.

6. Agencement de guidage selon l'une des revendications précédentes, dans lequel la zone d'appui présente une surface d'appui (11) parallèle au sens transversal et se compose notamment de celle-ci.

7. Agencement de guidage selon l'une des revendications précédentes, dans lequel une dimension transversale de la zone d'appui est au moins trois fois, de préférence au moins quatre fois, notamment au moins cinq fois plus grande que celle de la zone de roulement.

8. Agencement de guidage selon l'une des revendications précédentes, dans lequel le produit scalaire du sens de l'écartement et du sens de la gravité est supérieur ou égal à zéro, notamment dans lequel le sens de l'écartement est orthogonal au sens de la gravité ou parallèle au sens de la gravité.

9. Agencement de guidage selon l'une des revendications précédentes, lequel est en outre maintenu sous une précontrainte assurée notamment par le guidage à roulement et contribuant notamment à la force de retenue.

10. Agencement de guidage selon la revendication 9, dans lequel la précontrainte est réglable.

11. Agencement de guidage selon la revendication 10, dans lequel un réglage différent de la précontrainte peut s'effectuer localement.

12. Agencement de guidage selon la revendication 11 ou 12, dans lequel la réglabilité est à la faveur de l'épaisseur de matériau d'une ou plusieurs plaques de montage (25, 35) reliant le guidage à roulement à la partie stationnaire et/ou à la partie mobile.

13. Agencement de guidage selon l'une des revendications précédentes, dans lequel la zone de roulement consiste en un rail de roulement (12) fixé sur un support (1.1) constituant notamment la zone d'appui, et ce notamment à la même hauteur que la zone d'appui, et dans lequel un patin de roulement (22.1, 22.2) du guidage à roulement, adapté audit rail de roulement, est monté sur la partie mobile, notamment par le biais de la plaque de montage.

14. Agencement de guidage selon la revendication 13, dans lequel une butée (27) du patin de roulement présente une flexion prédéfinie à l'encontre du sens d'appui.

15. Agencement de guidage selon l'une des revendications précédentes, dans lequel il est prévu, des deux côtés, par rapport au sens transversal, une zone d'appui et un guidage à roulement.

16. Agencement de guidage selon l'une des revendications précédentes, dans lequel une zone de la partie mobile en engagement par roulement avec la zone de roulement et une zone de la partie mobile en appui coulissant sur la zone d'appui sont divisées en sections réparties le long de l'axe de déplacement en étant espacées les unes des autres.

17. Machine-outil (10) comprenant un agencement de guidage selon l'une des revendications précédentes, comprenant notamment un premier agencement de guidage de ce type pour le guidage horizontal d'un premier chariot ou d'une première colonne (2) sur un banc (1) de la machine-outil, et encore notamment un deuxième agencement de guidage de ce type pour le guidage d'un deuxième chariot (3) sur le premier chariot ou la première colonne le long d'un deuxième axe de déplacement orienté de manière orthogonale au premier axe de déplacement, en étant notamment orienté verticalement.
